# DEMANDE DE BREVET EUROPEEN

(11) **EP 1 270 264 A1**
(43) Date de publication de la demande: **02.01.2003**
(21) Numéro de dépôt: 01870133.4
(22) Date de dépôt: 21.06.2001
(51) Int. Cl.: B42F 5/00, G11B 33/04, G07C 7/00

(54) **Dispositif de classement pour disques de tachygraphe**

(71) Demandeur: Debroux, Joel M., 1495 Marbais (BE)
(72) Inventeur: Debroux, Joel M., 1495 Marbais (BE)
(74) Mandataire: Vandeberg, Marie-Paule L.G.

(57) **Abrégé**

La présente invention permet le rangement et l'archivage de disques (4) de tachygraphe en fournissant un dispositif (1) comportant un support (2) plan sur lequel sont fixés un ou plusieurs ergots (3); une languette (5) de fixation rabattable permettant de maintenir les disques (4) en place.

## Description

Les tachygraphes pour véhicules routiers sont des compteurs de vitesse qui comportent une horloge électrique et un mécanisme d'enregistrement de la vitesse sur un disque en fonction du temps. Ils peuvent être électroniques ou mécaniques. La réglementation impose de comptabiliser le temps de conduite, le temps de travail, le temps d'attente et le temps de repos de tout véhicule dont la masse maximale autorisée est supérieure à 3,5 t.

Un chauffeur met en place un disque dès qu'il prend en charge un tel véhicule. Le disque est lié aux prestations du chauffeur et n'est donc pas lié au véhicule. Au volant d'un même véhicule peuvent se succéder plusieurs chauffeurs, chacun utilisant son propre disque. La réglementation impose par ailleurs l'utilisation d'un disque par jour. Si un chauffeur conduit successivement 2 véhicules dont le tachygraphe n'est pas du même type, il devra donc utiliser 2 disques différents.

Le chauffeur doit pouvoir présenter, lors d'un contrôle, les disques de la semaine en cours ainsi que le dernier disque de la semaine précédente.

L'employeur d'un chauffeur est tenu de conserver les disques au moins 1 an, mais les services de la TVA et des contributions imposent des délais de respectivement 3 et 5 ans. La législation sociale exige également la conservation des disques pendant 5 ans.

Une société de transport qui dispose d'une flotte de camions et qui a recours aux services de nombreux chauffeurs, se retrouve rapidement face au problème du classement, de rangement et de la présentation de ces nombreux disques.

Non seulement les autorités de contrôle et les autorités fiscales doivent avoir accès aux informations contenues sur ces disques, mais l'employeur lui-même doit pouvoir vérifier les prestations de ses chauffeurs.

Les chauffeurs eux-mêmes s'ils dépassent les normes hebdomadaires de conduite autorisée, doivent pouvoir calculer les périodes de récupération auxquelles ils ont droit durant les semaines suivantes.

Il existe donc bien un besoin de rangement et d'archivage des nombreux disques de tachygraphe. Aucun dispositif n'existe actuellement. Les employeurs des chauffeurs utilisent des élastiques, trombones, agrafes, ficelles, clous au mur, boîtes à chaussure pour ranger tant bien que mal leurs nombreux disques. Ces dispositifs précaires ne permettent pas une consultation aisée des disques par les contrôleurs des différents services.

On trouve de nombreux modèles de tachygraphes qui répondent aux exigences légales en présentant un seul disque en cours d'utilisation. Des modèles plus élaborés comme ceux décrits dans EP 1 074 948 permettent d'empiler plusieurs disques de façon à couvrir une période de travail d'une semaine. Les disques journaliers seront utilisés successivement mais le problème de stockage et d'archivage des disques marqués n'est en rien résolu de cette façon.

La présente invention se propose de résoudre de façon simple les besoins suivants :
- un stockage des disques de chaque chauffeur pour chaque période d'une longueur déterminée (mois, semestre, année) ;
- une consultation aisée des disques qui se présentent tous physiquement sous le même aspect, de façon à permettre un repérage rapide des mentions obligatoires comme le nom du chauffeur, la date, etc.;
- un archivage de tous les disques avec un encombrement réduit.

La présente invention a pour objet un dispositif de rangement pour disques de tachygraphe qui comporte un support plan, un ou plusieurs ergots aptes à s'insérer dans la découpe centrale des disques, les ergots étant suffisamment espacés pour que les disques empilés sur un ergot ne touchent pas les disques empilés sur un autre ergot, un ou plusieurs moyens de fixation souples aptes à se rabattre sur chacun des derniers disques empilés. D'autres particularités de l'invention sont décrites dans les revendications dépendantes.

D'autres caractéristiques et avantages de l'invention ressortiront de la description détaillée suivante d'une forme de réalisation particulière de l'invention, référence étant faite aux dessins annexés dans lesquels,
la fig. 1 représente une vue en plan d'un dispositif (1) suivant l'invention, comprenant 3 ergots (3) avec disques (4) sur le même support (2);

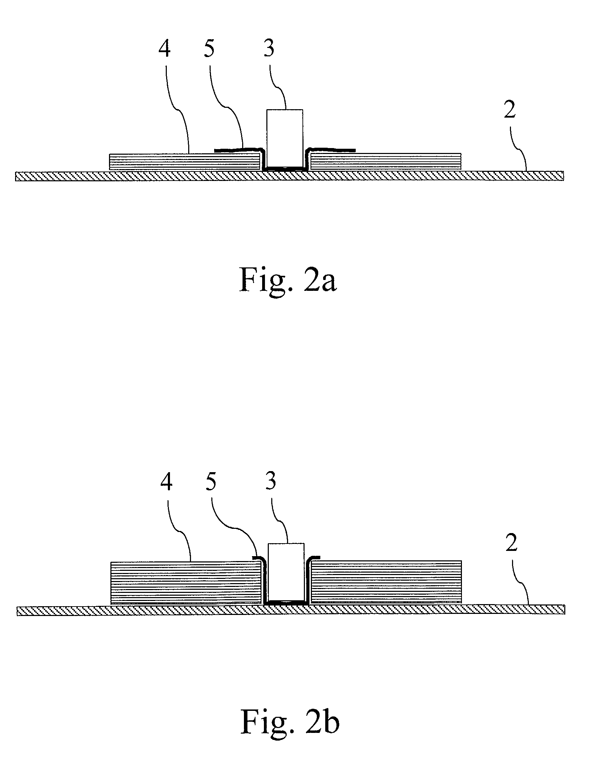

la fig. 2a et la fig. 2b représentent une vue en coupe d'un de ces ergots (3) avec 2 niveaux de remplissage différents; la languette (5) permet de retenir les disques (4) ;
la fig. 3 représente une variante d'exécution du dispositif (1) suivant l'invention; 3 ergots (3) avec disques (4) sont fixés sur la face intérieure d'un dispositif (1).

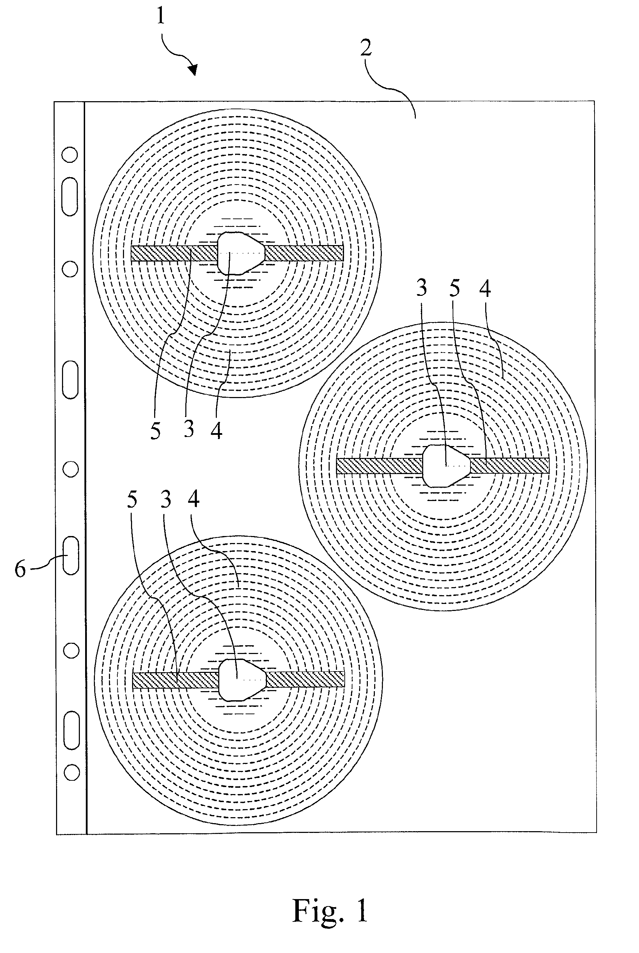

Selon un mode particulier de réalisation de l'invention décrit à la fig. 1, le dispositif de rangement (1) comporte un support (2) plat et rigide ou semi-rigide en carton ou en matière plastique d'environ 22 cm sur 30 cm. Le support est surmonté de 3 ergots (3) dont la section dans le plan horizontal est de forme essentiellement ovoïde. La forme de cet ergot (3) peut être obtenue par l'interpénétration de 2 circonférences A et B d'un rayon respectif de 7,25 mm et 3,50 mm. Le centre des 2 circonférences A et B est éloigné de 9,75 mm. Cette forme ovoïde peut également présenter une ou plusieurs troncatures planes sans que les caractéristiques de l'invention en soient modifiées. Ces troncatures planes permettent un passage plus aisé des languettes (5) entre l'ergot (3) et la pile de disques (4) au cours de l'utilisation.

Cet ergot (3) peut être réalisé par moulage d'une matière plastique ou par fraisage de bois ou de métal. Il est alors ensuite collé, vissé ou fixé par tout autre moyen approprié sur le support (2). La hauteur de chaque ergot (3) est, dans cet exemple particulier, d'environ 1,5 cm, ce qui permet en plaçant 3 ergots (3) par support (2), d'archiver jusqu'à 315 disques (4) environ, ce qui correspond à une année d'activité maximum d'un chauffeur.

Cet ergot (3) adopte exactement la forme de la découpe prévue au centre des disques (4) de tachygraphe en usage en Europe. Cette forme permet de positionner les disques (4) d'une façon précise et d'empêcher leur rotation, de façon à permettre une consultation aisée et rapide de tous les disques (4) empilés, qui se présentent tous de la même façon. Il est cependant évident que d'autres formes d'ergot peuvent convenir, pour autant qu'elles permettent l'insertion des disques et qu'elles empêchent leur rotation.

Entre le support (2) plan et chaque ergot (3), est glissée une languette souple (5) par exemple en métal comme du fer, du laiton ou du cuivre, à raison d'au moins une languette (5) par ergot (3) . La longueur totale de cette languette (5) sera supérieure de 4 à 10 cm à la hauteur de l'ergot (3). Sa largeur peut être d'environ 0,5 cm. Son épaisseur de l'ordre de 0,1 cm, permet, sans effort, différents pliages à angle droit.

La languette (5) étant placée sous l'ergot (3), ses deux extrémités sont repliées verticalement de part et d'autre de cet ergot (3), en longeant les bords verticaux de l'ergot (3).

Les disques (4) correctement positionnés vis-à-vis de l'ergot (3), sont traversés en leur centre par les 2 extrémités parallèles de la languette (5), de façon à constituer un empilement régulier. Le stockage est sécurisé par le rabattement à angle droit, de façon sensiblement horizontale et sur la pile de disques (4), des deux extrémités de la languette (5) dépassant la pile de disques (4).

Les languettes (5) doivent être suffisamment souples pour permettre des pliages successifs à des hauteurs différentes. De cette manière on peut ajouter, chaque semaine, les 7 ou 8 disques (4) de la semaine écoulée et replier la languette (5) à une hauteur adaptée à celle de la pile quelque peu supérieure, de manière à maintenir les disques (4) en place.

Dans d'autres formes de réalisation, la languette (5) peut traverser l'ergot (3) dans une région proche de sa base ou même passer dans le support (2). L'ergot (3) peut être obtenu par injection de matière plastique dans un moule qui présente la languette (5) métallique comme insert. Cette façon de fabriquer l'ensemble "ergot-languette" présente l'avantage de solidariser les 2 éléments.

Deux perforations (6) ou davantage, peuvent être prévues dans le support (2) de manière à pouvoir l'insérer dans un classeur de format par exemple A4 à 2 anneaux ou davantage. Dans cet exemple de réalisation, en classant 5 dispositifs (1) suivant l'invention par classeur, il est possible d'archiver 5 années d'activité d'un chauffeur, soit la durée maximale d'activité que l'employeur doit être susceptible de présenter lors d'un contrôle.

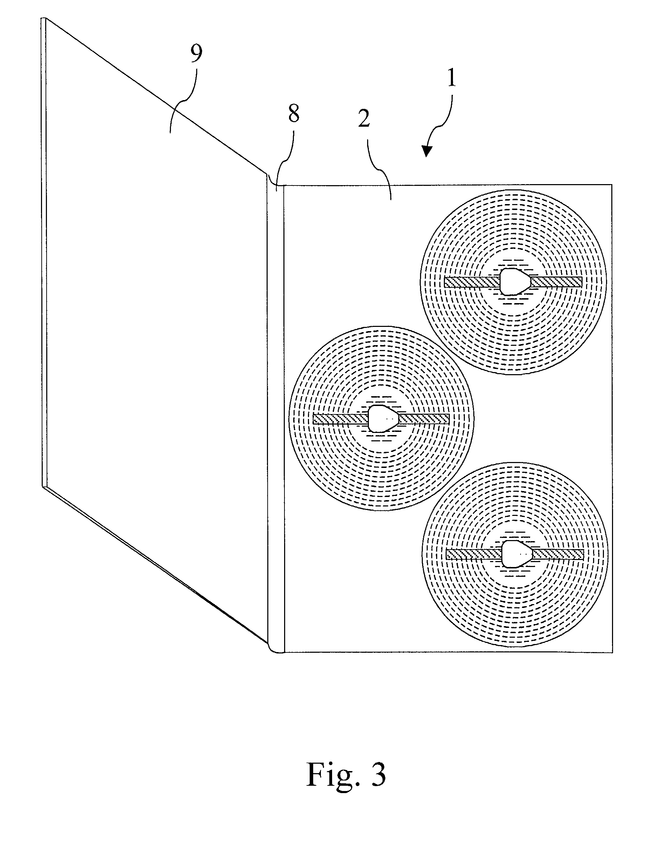

Suivant une variante de réalisation représentée à la fig. 3, on peut prévoir que le support (2) soit rigide et se prolonge par un rebord (8) et une partie (9) apte à se rabattre sur la face opposée du dispositif (1). Le rabat (9) a une longueur identique à la longueur du support (2) et le rebord (8) a une largeur légèrement supérieure à la hauteur du ou des ergots (3). De cette manière, il est possible d'inscrire des indications sur l'extérieur du rebord (8) et de ranger chaque dispositif directement dans une armoire.

Une autre variante, non illustrée, peut se décrire de la façon suivante. En vue de ne pas faire passer les extrémités des languettes (5) par le trou central du disque (4), la pile de disques (4) peut être maintenue en faisant passer les languettes de longueur adaptée, par le bord des disques (4). La pile de disques (4) est ainsi maintenue par l'extérieur. Cette forme de réalisation présente l'avantage de ne pas endommager le centre des disques (4), lors de très fréquentes manipulations.

D'une façon générale, l'un des avantages de la présente invention peut se décrire de la façon suivante. Il est possible de ranger de manière simple et ordonnée, l'ensemble des disques (4) se trouvant à bord d'une cabine de camion, où l'espace disponible reste toujours exigu. Grâce à un seul classeur, on peut facilement stocker, retrouver ou consulter les disques vierges en réserve, les disques de la semaine en cours et de la précédente, les disques plus anciens à remettre à l'employeur pour archivage. Ce résultat est aisément atteint au moyen de 3 ergots (3) disposés de façon judicieuse sur les faces internes du classeur personnel du chauffeur.

Le dispositif suivant l'invention permet de stocker un grand nombre de disques (4) dans un espace aussi réduit que possible. De plus, il permet, par un marquage ou étiquetage approprié sur le support (2) et/ou le rebord (8), de retrouver rapidement un disque (4) particulier parmi un grand nombre de disques(4).

## Revendications

1. Dispositif (1) de rangement de disques (4) de tachygraphe, comportant:
- un support (2) plan sur lequel sont fixés
- un ou plusieurs ergots (3) aptes à être insérés dans l'orifice central des disques (4), les ergots (3) étant suffisamment espacés pour que les disques (4) insérés sur un ergot ne touchent pas les disques (4) insérés sur un autre ergot (3),
- au moins une languette (5) de fixation par ergot (3), chacune des deux extrémités de la languette (5) étant apte à se rabattre à des hauteurs variables sur la partie supérieure du dernier disque (4) empilé.

2. Dispositif (1) suivant la revendication précédente, **caractérisé en ce que** la ou les languettes (5) sont aptes à longer les bords verticaux de l'ergot (3) et à se plier à angle droit pour se rabattre sur le dernier disque (4) empilé.

3. Dispositif (1) suivant l'une quelconque des revendications précédentes, **caractérisé en ce que** la forme de l'orifice des disques (4) et la forme de la section de l'ergot (3) sont telles qu'elles empêchent la rotation des disques (4).

4. Dispositif (1) suivant l'une quelconque des revendications précédentes, **caractérisé en ce que** la section du ou des ergots (3) a une forme essentiellement ovoïde.

5. Dispositif (1) suivant l'une quelconque des revendications précédentes, **caractérisé en ce que** les deux extrémités de la languette (5) de fixation sont situées sur le pourtour de l'ergot (3) et sont aptes à se rabattre vers l'extérieur du disque (4).

6. Dispositif (1) suivant l'une quelconque des revendications précédentes, **caractérisé en ce que** le support (2) se prolonge par un rebord (8) lui-même prolongé par un rabat (9).

7. Dispositif (1) suivant la revendication précédente, **caractérisé en ce que** le rebord (8) a une largueur légèrement supérieure à la hauteur du ou des ergots (3).

8. Dispositif (1) suivant l'une quelconque des revendications 1 à 5, **caractérisé en ce que** le support (2) est perforé de deux trous (6) ou davantage.

9. Dispositif (1) suivant la revendication précédente, **caractérisé en ce que** le support (2) est en matière plastique souple ou en papier renforcé.

10. Dispositif (1) suivant la revendication 6 ou 7, **caractérisé en ce que** le support (2), le rebord (8) et le rabat (9) sont en matière rigide ou semi-rigide.
